(19) Europäisches Patentamt
European Patent Office
Office européen des brevets

(11) Publication number: 0 135 726 B1

(12) **EUROPEAN PATENT SPECIFICATION**

(45) Date of publication of patent specification: **11.04.90**

(51) Int. Cl.[5]: **C 08 L 23/02**, C 08 L 71/12, C 08 K 5/06, C 08 K 5/52, H 01 B 3/44

(21) Application number: **84109144.0**

(22) Date of filing: **01.08.84**

(54) **Flame retardant polyolefin compositions, articles, and process of manufacture.**

(30) Priority: **23.08.83 US 525783**

(43) Date of publication of application:
**03.04.85 Bulletin 85/14**

(45) Publication of the grant of the patent:
**11.04.90 Bulletin 90/15**

(84) Designated Contracting States:
**DE FR GB IT NL**

(56) References cited:
**EP-A- 129 824**
**EP-A- 133 641**
**US-A-3 803 268**
**US-A-4 021 406**

(73) Proprietor: **GENERAL ELECTRIC COMPANY**
**1 River Road**
**Schenectady New York 12305 (US)**

(72) Inventor: **Abolins, Visvaldis**
**15 Haddington Lane**
**Delmar New York 12054 (US)**
Inventor: **Betts, Joseph Elwood**
**44 Park Lane**
**Westport Connecticut 06880 (US)**
Inventor: **Holub, Fred Frank**
**2263 Preisman Drive**
**Schenectady New York 12305 (US)**
Inventor: **Lee, Gim Fun, Jr.**
**11 Drawbridge Drive**
**Albany New York 12203 (US)**

(74) Representative: **Catherine, Alain**
**General Electric France Service de Propriété Industrielle 18 Rue Horace Vernet**
**F-92136 Issy-Les-Moulineaux Cedex (FR)**

**EP 0 135 726 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The polyphenylene ether resin and methods for their preparation are known, and moreover, described in the patent literature, including US—A—3,306,874; 3,306,875; 3,257,357; and 2,257,358. The polyphenylene ether resins are also known to be combinable with other polymers to form compositions which are extrudable and moldable into products characterized by outstanding properties. US—A—3,383,435 described blends of polyphenylene ether resin, and polystyrene. US—A—4,166,055 and 4,239,673 disclose blends of polyphenylene ether, polyolefin and styrene-butadiene block copolymers.

As has also been disclosed previously in the patent literature, blends containing polyphenylene ether resin and styrene polymers, which are normally flammable, can be treated to impart flame retardancy by including additives for that purpose. Thus, for instance, polyphenylene etherpolystyrene compositions containing halogenated aromatic flame retardant compounds are described in US—A—4,203,931; and the combined use of an aromatic phosphate compound and a halogenated aromatic compound to improve the flame resistance of polyphenylene ether-polystyrene blends is proposed in US—A—4,355,126.

US—A—3803268 describes the use of 0.01 to 10% by weight of a polyphenylene ethers as an antioxidant to reduce chemical and physical deterioration in polyolefins when exposed to elevated temperatures. US—A—4021406 teaches the use of a flame retardant combination comprising tris(halophenyl)phosphates, antimony oxide and an halogenated organic compound.

This invention comprises, in one aspect, a flame retardant composition free of poly (tetrafluoroethylene) comprising an admixture of:

(a) at least 30 parts of a homopolymer of a $C_2$ to $C_{10}$ olefin per 100 parts of (a) and b(i) combined; and

(b) a flame retardant combination consisting of:

(i) a polyphenylene ether resin,

(ii) an organic phosphate compound of the general formula

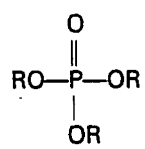

where R is the same or different and is alkyl, cycloalkyl, aryl, alkyl substituted aryl, halogen substituted aryl, aryl substituted alkyl, halogen, or a combination of any of the foregoing, provided at least one R is aryl, and

(iii) a material selected from: (1) compounds of the general formula

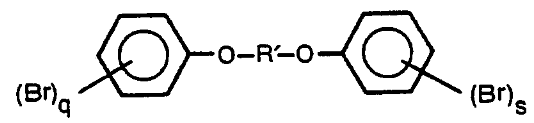

where R' is alkylene, straight or branched, having from 1 to 10 carbon atoms; and q and s represent the total number of bromine atoms on each ring and are independently integers from 1 to 5 and (2) a tetrabromobisphenol-A oligomeric polycarbonate, and optionally,

(iv) a synergistic agent which enhances the flame retardancy effect of b(iii).

Another aspect of the invention comprises articules formed in whole or in part from the composition, including electrically conductive articles, for example, wires and cables, in which the composition is employed as an insulation material.

Still another facet of the invention comprises a process for forming the above mentioned electrically conductive articles.

The compositions described are normally thermoplastic and can be shaped by conventional thermal means such as extrusion or molding. The compositions are also radiation curable provided a crosslinkable polyolefin, for example, polyethylene, is used; curing can be accomplished by exposure to high energy electrons of a sufficient strength to cause crosslinking. In other embodiments, a heat activatable cross-linking agent can be included to make the composition heat curable, and curing can be accomplished by exposure of the composition to elevated temperatures.

The invention in its various aspects is advantageously practiced with use of certain preferred materials, which are described below.

The polyolefins which are suitable for use in the practice of this invention as component (a) are selected from among homopolymers based on olefins containing from 2 to 10 carbon atoms, that is, a $C_2$ to $C_{10}$ olefin, and preferably, a homopolymer of a $C_2$ to $C_4$ olefin, for example, polyethylene, polypropylene, polybutene.

Methods of preparation for these polymeric materials are known. A useful reference is the Encyclopedia of Polymer Science and Technology, John Wiley and Sons, Inc. (1965—1969). The pertinent sections are set forth in volume 6, pages 275—286 and 332—338 (polyethylene); volume 11, pages 597—606 (polypropylene); volume 2, pages 759—761 (polybutylene); and volume 9, pages 440—449

(polymers derived from higher olefins, such as 3-methyl-1-butene; 1-pentene; 4-methyl-1-pentene; and 1-hexene).

The polyphenylene ether resin, component (b) (i) of the flame retardant combination, is preferably a homo or copolymer having units of the formula

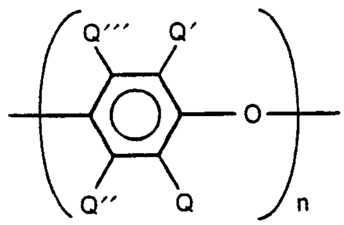

wherein Q, Q', Q'' and Q''', are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20, and preferably at least 50.

In general, the polyphenylene ether resins are self-condensation products of monohydric monocyclic phenols produced by reacting the phenols with oxygen in the presence of complex metal catalysts, with molecular weight being controlled by reaction time, longer times providing a higher average number of repeating units. Particular procedures are known to those skilled in the art and are described in the patent literature, including US—A—3,306,874, 3,306,875, 3,257,357 and 3,257,358.

Illustrative polymers which can be produced by such procedures and which are within the above general formula are:

Poly(2,6-dilauryl-1,4-phenylene)ether; poly(2,6-diphenyl-1,4-phenylene)ether; poly(2,6-dimethoxyl-4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-di-chloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether and poly(2,6-dibromo-1,4-phenylene)ether.

Also included are polyphenylene ether copolymers, such as copolymers of 2,6-dimethylphenol with other phenols, for example, with 2,3,6-trimethylphenol or 2-methyl-6-butylphenol.

For purposes of the present invention, an especially preferred family of polyphenylene ethers include those having an alkyl substitution in the two positions ortho to the oxygen ether atom, i.e., those of the above formula wherein Q and Q' are alkyl, most preferably having from 1 to 4 carbon atoms. Illustrative members of this class are:

poly(2,6-dimethyl-1,4-phenylene)ether;
poly(2,6-diethyl-1,4-phenylene)ether;
poly(2-methyl-6-ethyl-1,4-phenylene)ether;
poly(2-methyl-6-propyl-1,4-phenylene)ether;
poly(2,6-dipropyl-1,4-phenylene)ether; and
poly(2-ethyl-6-propyl-1,4-phenylene)ether.

The most preferred polyphenylene ether resin for purposes of the present invention is poly(2,6-dimethyl-1,4-phenylene)ether.

The organic phosphate, component (b) (ii) of the flame retardant combination, is an aromatic phosphate compound of the formula

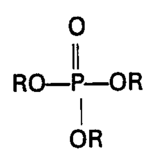

where R is the same or different and is alkyl, cycloalkyl, aryl, alkyl substituted aryl, halogen substituted aryl, aryl substituted alkyl, halogen, or a combination of any of the foregoing, provided at least on R is aryl.

Examples include phenyl bisdodecyl phosphate, phenylbisneopentyl phosphate, phenyl-bis(3,5,5'-trimethyl-hexyl phosphate), ethyldiphenyl phosphate, 2-ethyl-hexyldi-(p-tolyl) phosphate, bis-(2-ethylhexyl)p-tolylphosphate, tritolyl phosphate, bis-(2-ethylhexyl)phenyl phosphate, tri-(nonylphenyl)phosphate, di(dodecyl)p-tolyl phosphate, tri-cresyl phosphate, triphenyl phosphate, dibutylphenyl phosphate, 2-chloroethyldiphenyl phosphate, p-tolyl bis-(2,5,5'-trimethylhexyl)phosphate, and 2-ethylhexyldiphenyl phosphate. The preferred phosphates are those in which each R is aryl. Especially preferred is triphenyl phosphate, which may be either unsubstituted or substituted, for example, isopropylated triphenyl phosphate.

Component (b) (iii) of the flame retardant combination is (1) a brominated compound of the formula

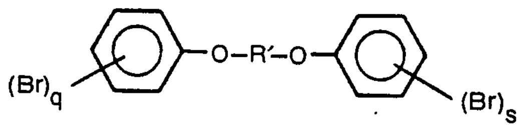

where R' is alkylene, straight or branched, having from 1 to 10 carbon atoms, and more preferably from 1 to 6 carbon atoms; and q and s represent the total number of bromine atoms on each ring and are independently integers from 1 to 5.
Examples are

1,2-bis(2,4,6-tribromophenoxy)ethane;
1,3-bis(2,4,6-tribromophenoxy)propane;
1,4-bis(2,4,6-tribromophenoxy)butane; and
2,2-bis(4-bromophenoxy)propane.

Preferred are
1,2-bis(2,4,4-tribromophenoxy)ethane and
1,2-bis(2,3,4,5,6-pentabromophenoxy)ethane.

A method of preparation is described in US—A—4,016,138.

Also useful as component b (iii) are (2) oligomeric tetrabromobisphenol-A polycarbonates.

The amount of the olefinic polymer, component (a), is subject to wide variation within the composition, ranging from minor to major proportions based on the total weight of the composition. However component (a) will be present in an amount of at least 30 parts by weight, per 100 parts of (a) and (b) (i) combined.

The flame retardant combination is present in at least the minimum amount necessary to impart a degree of flame retardancy to the composition. The particular amount will vary, depending on the amount of the polyolefin present and possibly other normally flammable ingredients which might also be included in the composition. Each of the three components which make up the flame retardant combination will generally be added in an amount within the following preferred ranges:

| | |
|---|---|
| Polyphenylene ether resin, (b) (i) | 5 to 70 parts |
| Organic phosphate, (b) (ii) | 1 to 30 parts |
| Brominated material, (b) (iii) | 1 to 50 parts |

based on 100 parts by weight of (a) and (b) (i) together.

If desired, the composition can be modified to be thermosetting, that is, heat curable, by including one or more compounds effective to cause crosslinking of the polyolefins when the composition is exposed to elevated temperatures, for example, about 149°C (300°F) or higher, for a relatively brief period of time. Preferably, the crosslinking agent has a low volatility at the temperatures employed for processing, as well as good stability in the presence of the other ingredients of the composition. Special mention is made of organic peroxides, dicumyl peroxide;

2,5-dimethyl-2,5-di(terbutylperoxy)hexane;
α,α'-bis(t-butylperoxy)-diisopropyl benzene;
ethyl 3,3-bis(t-butylperoxy)butyrate;
n-butyl-4,4-bis(4-butylperoxy)valerate; and
2,5-dimethyl-2,5-di(t-butylperoxy)hexane-3.

Amounts of from 1.5 to 10 parts of the cross-linking agent, for each 100 parts of (a) and (b) (i) combined, are generally sufficient to provide the desired curing.

The composition can be further modified, if desired, by including one or more additives often used with thermoplastic polymers, some of which may serve to beneficially affect the chemical and physical properties. Examples are mineral fillers, including clay; reinforcing agents, for example, glass fibers, flakes or spheres; plasticizers; stabilizers; antioxidants; colorants, and processing aids.

Particular mention is made of polymeric materials having elastomeric or elastomeric-like properties. They may be, for instance, copolymers and terpolymers of styrene, such as styrene-butadiene copolymers, styrene-isoprene copolymers, styrene-butadiene-styrene terpolymers, and styrene-isoprene-styrene terpolymers, as well as hydrogenated derivatives of any of the foregoing. Such materials will be added in amounts ranging from 1 to 50 parts by weight, or more, for each 100 parts of (a) and (b) (i) together, which

may help to upgrade the compatibility of components (a) and (b) (i).

Optionally, and sometimes desirably, a synergistic for component (b) (iii) can be added to enhance the flame retardancy effect. This optional component can be selected from among compounds known to synergistically improve the flame resistance imparting properties of brominated agents, and generally such compounds are based on antimony and/or molybdenum. Especially favored for use in the present invention is antimony oxide, usually in amounts of from about 1 to 10 parts by weight for each 100 parts of (a) and (b) (i), but other antimony compounds and amounts are possible depending on particular requirements, and these will be known to those skilled in the art.

The composition may be formed simply by mechanical admixture of the ingredients, or preparation may be accomplished by melt or solution blending, which may result in better homogeneity. The admixture may be thermally processed into the desired shaped product as by extrusion or molding, as explained. One particular application involves the use of the composition as insulation material for partial or complete coverage of the surface of electrically conductive articles, for example, copper, nickel or aluminum wires and cables. A method of use comprises heating the composition above the glass transition temperature to form a melt, applying the melt to the surface of the electrical conductor, and then cooling the melt and allowing it to harden or exposing the composition to high energy radiation, such as high energy electrons, to effect crosslinking. The insulated article can additionally comprise an outer protective coating, which can be a thermoplastic or thermosetting polymer, for example, polyvinyl chloride. Exemplary embodiments are shown in the accompanying drawings, which are described below.

Figure 1 illustrates an electrically conductive article in accordance with the invention, in cross-section, comprising copper wire 2, and insulation layer 4, consisting of a flame retardant composition as described above.

Figure 2 illustrates a modified embodiment, also in cross-section, comprising copper wire 2, flame retardant insulation layer 4, and outer protective polymeric coating 6.

The compositions of the invention are illustrated in the following examples, which are for illustrative purposes only and are not intended as a limitation of the scope. All amounts shown are in parts by weight.

Example 1—2

Compositions were prepared using the ingredients noted below by milling the ingredients on a hot two roll mill set a 149 to 160°C (300 to 320°F) in the case of composition 1, and 121 to 127°C (250 to 260°F) in the case of composition 2. In each case, the milled material was sheeted and molded. The properties are shown in Table 1.

TABLE 1

| Ingredients | 1 | 2 |
|---|---|---|
| Polyethylene, high density | 70 | — |
| Polyethylene, low density | — | 70 |
| Poly(2,6-dimethyl-1,4-phenylene)ether resin | 30 | 30 |
| Isopropylated triphenyl phosphate | 25 | 25 |
| Bis(2,4,6-tribromophenoxy)ethane | 4 | 4 |
| Antioxidant | 1 | 1 |
| Properties | | |
| Tensile strength, (psi) N/mm$^2$ | (1290) 8.88 | (560) 3.86 |
| Elongation, % | 40 | 25 |
| Vertical Burn Test (⅛ inch (3.175 mm) thick specimen) | ND,ND | D,D |
| Seconds to quench, | | |
| 1st ignition | 0.0 | 12.21 |
| 2nd ignition | 0.2 | >30 |

D = Drip ND = No Drip

Examples 3—8

Additional components were prepared by hot roll milling the ingredients noted below at a temperature of 350 to 182°C (360°F), then sheeting and molding. The results are shown in Table 2.

TABLE 2

| Ingredients | 3 | 4 | 5 | 6 | 7 | 8 |
|---|---|---|---|---|---|---|
| High density polyethylene | 70 | 60 | 60 | 50 | 70 | 60 |
| SEBS block copolymer | 10 | 10 | 20 | 20 | 10 | 10 |
| Poly(2,6-dimethyl-1,4-phenylene) ether resin | 20 | 30 | 20 | 30 | 20 | 30 |
| Isopropylated triphenyl phosphate | 25 | 25 | 25 | 25 | 10 | 10 |
| Bis(2,4,6-tribromophenoxy)ethane | 4 | 4 | 4 | 4 | 4 | 4 |
| Antioxidant | 1 | 1 | 1 | 1 | 1 | 1 |
| Properties | | | | | | |
| Tensile strength, (psi) $N/mm^2$ | (1345) 9.26 | (1370) 9.44 | (1280) 8.82 | (1200) 8.27 | (1390) 9.58 | (1400) 9.64 |
| Elongation, % | 55 | 40 | 50 | 55 | 50 | 45 |
| Vertical Burn Test ($\frac{1}{8}$") 3.175 mm | ND,ND | ND,ND | ND,ND | ND,ND | ND,ND | ND,ND |
| Seconds to quench, | | | | | | |
| 1st ignition | 6.10 | 0.1 | 3.5 | 0.0 | 8.1 | 0.1 |
| 2nd ignition | >30 | 2.4 | 12.16 | 0.1 | 14.16 | 0.0 |

ND = No Drip
SEBS: styrene-ethylene/butylene-styrene

Examples 9—11

The ingredients listed below were hot roll milled at 182°C (360) to 188°C (370), sheeted and molded to provide test samples having the properties shown in Table 3.

TABLE 3

| Ingredients | 9 | 10 | 11 |
|---|---|---|---|
| High density polyethylene | 50 | 50 | 34 |
| SEBS block copolymer | 20 | 25 | 33 |
| Poly(2,6-dimethyl-1,4-phenyleneether)resin | 30 | 25 | 33 |
| Isopropylated triphenyl phosphate | 10 | 10 | 10 |
| Bis(2,4,6-tribromophenoxy)ethane | 4 | 4 | 4 |
| Antioxidant | 1 | 1 | 1 |
| Properties | | | |
| Tensile strength, (psi) $N/mm^2$ | (1375) 9.47 | (1320) 9.09 | (560) 3.86 |
| Elongation, % | 65 | 65 | 70 |
| Vertical Burn Test, ($\frac{1}{8}$") 3.175 mm | ND,ND | ND,ND | ND,ND |
| Seconds to quench, | | | |
| 1st ignition | 0.0 | 0.1 | 0.0 |
| 2nd ignition | 1.0 | 0.0 | 0.0 |

ND = No Drip
SEBS = Styrene-ethylene/butylene-styrene

Examples 12—14

The ingredients were hot roll milled at 193°C (380°F) to 199°C (390°F) in each case. After milling, the composition of Example 12 was molded for 10 minutes at 232°C (450°F), and the compositions of Examples 13 and 14 were molded for the same amount of time but at 238°C (460°F). The results are reported in Table 4.

TABLE 4

| Ingredients | 12 | 13 | 14 |
|---|---|---|---|
| Polypropylene | 50 | 50 | 50 |
| * { Poly(2,6-dimethyl-1,4-phenylene ether)resin | 40 | 40 | 40 |
| * { Isopropylated triphenyl phosphate | 10 | 10 | 10 |
| Tetrabromobisphenol-A oligomeric polycarbonate | 10 | 20 | 20 |
| Styrene-ethylene/butylene-styrene block copolymer | 10 | 10 | 10 |
| Bis diphenyl phosphate of resorcinol | 10 | 10 | 10 |
| Antimony oxide | 5 | — | 5 |
| Properties | | | |
| Horizontal propagation, in cm (inches) after 30 seconds | 1.9 (¾″) | 1.27 (½″) | 1.27 (½″) |
| Horizontal Burn Test, (⅛ inch) 3.175 mm specimen | ND | ND | ND |

*Pre-extruded at (500 to 600°F) 260 to 316°C
ND = No Drip

Example 15

The ingredients were hot roll milled at 193°C (380°F) to 199°C (390°F), then molded for 10 minutes at 232°C (450°F) to give the results shown in Table 5.

TABLE 5

| Ingredients | |
|---|---|
| Polybutene | 50 |
| *Poly(2,6-dimethyl-1,4-phenylene ether)resin | 40 |
| Styrene ethylene/butylene-styrene block copolymer | 10 |
| *Isopropylated triphenyl phosphate | 10 |
| Tetrabromobisphenol-A oligomeric polycarbonate | 10 |
| Properties | |
| Horizontal propagation, in cm (inches) after 30 seconds | 1.9 (¾″) |
| Horizontal Burn Test, (⅛ inch) 3.175 mm specimen | ND |

*Pre-extruded together at (500 to 600°F) 260 to 316°C.

## Claims

1. A flame retardant composition free of poly(tetrafluoroethylene, comprising an admixture of:
(a) at least 30 parts of a homopolymer of a $C_2$ to $C_{10}$ olefin per 100 parts of (a) and b(i) combined; and
(b) a flame retardant combination consisting of:
(i) a polyphenylene ether resin,

(ii) an organic phosphate compound of the general formula

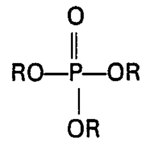

where R is the same or different and is alkyl, cycloalkyl, aryl, alkyl substituted aryl, halogen substituted aryl, aryl substituted alkyl, halogen, or a combination of any of the foregoing, provided at least one R is aryl, and

(iii) a material selected from: (1) compounds of the general formula

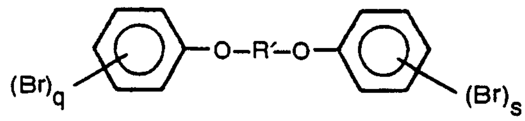

where R′ is alkylene, straight or branched, having from 1 to 10 carbon atoms; and q and s represent the total number of bromine atoms on each ring and are independently integers from 1 to 5 and

(2) a tetrabromobisphenol-A oligomeric polycarbonate; and optionally

(iv) a synergistic agent which enhances the flame retardancy effect of b(iii).

2. A composition according to Claim 1, in which (a) is a homopolymer of a $C_2$ to $C_4$ olefin.

3. A composition according to Claim 1, in which (a) is selected from polyethylene, polypropylene, and polybutene.

4. A composition according to Claim 1, in which (b)(i) is a homopolymer or copolymer having units of the formula

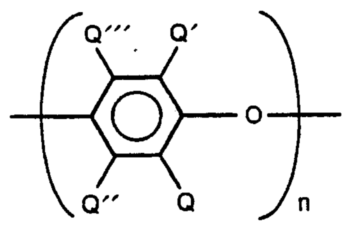

wherein Q, Q′, Q″ and Q‴, are independently selected from the groupe consisting of hydrogen, halogen, hydrocarbon radicals, halohydrocarbon radicals, hydroxycarbonoxy radicals, and halohydrocarbonoxy radicals; and n represents the total number of monomer units and is an integer at least about 20.

5. A composition according to Claim 1, in which (b)(i) is poly(2,6-dimethyl-1,4-phenylene ether) resin.

6. A composition according to Claim 1, in which component (b)(ii) is triphenyl phosphate.

7. A composition according to Claim 6, in which the triphenyl phosphate is isopropylated.

8. A composition according to Claim 1, in which (b)(ii) is selected from his diphenyl phosphate of resorcinol, diphenyl phosphate of hydroquinone, and bis diphenyl phosphate of bisphenol A.

9. A composition according to Claim 1, in which (b)(iii) is selected from 1,2-bis(2,4,6-tribromophenoxy)ethane and 1,2 bis(2,3,4,5,6-pentabromophenoxy)ethane.

10. A composition according to Claim 1 in which the synergistic agent is an antimony compound.

11. A composition according to Claim 10 in which the antimony compound is antimony oxide.

12. A composition according to Claim 1, which includes a polymer having elastomeric properties.

13. A composition according to Claim 12 in which the polymer is a styrene co- or terpolymer.

14. A composition according to Claim 13 in which the polymer is selected from a styrene-butadiene-styrene terpolymer, a styrene-isoprene-styrene terpolymer, and a styrene-ethylene/butylene-styrene terpolymer.

15. A composition according to Claim 1, in which component (a) is crosslinkable, said composition being curable upon exposure to high energy radiation.

16. A composition according to Claim 15 which includes an effective amount of a crosslinking agent for (a), said composition being curable upon heating.

17. A composition according to Claim 16 in which the crosslinking agent is an organic peroxide.

18. An electrically conductive article, comprising a metallic conductor, at least a portion of the surface of which is covered with an electrically insulating layer of a flame retardant composition as set forth in any of the preceding claims.

19. An article according to Claim 18 which comprises a protective polymeric outer coating for the insulating layer.

20. An article according to Claim 18 in which the flame retardant composition has been cured by exposure to high energy radiation.

21. An article according to Claim 20 in which the composition also includes a crosslinking agent.

22. An article according to Claim 18 in which the flame retardant composition includes a crosslinking agent and has been cured by exposure to heat.

23. A method for preparing an electrically conducting article comprising an electrical conductor and a layer of a flame retardant insulating material on at least a portion of the conductor surface, comprising providing a composition according to Claim 1, forming a melt thereof, applying it to the conductor surface and effecting cure.

24. A method according to Claim 23 in which the flame retardant insulating composition comprises polyethylene, polypropylene or polybutene.

25. A method according to Claim 24 in which the flame retardant insulating composition comprises poly-(2,6-dimethyl-1,4-phenylene ether).

26. A method according to Claim 24 in which the flame retardant of the insulating composition comprises, in combination, poly(2,6-dimethyl-1,4-phenylene ether), isopropylated triphenyl phosphate and bis-(2,4,6-tribromophenoxy)ethane.

27. A method according to Claim 24 in which the flame retardant of the insulating composition comprises, in combination, poly(2,6-dimethyl-1,4-phenylene ether), isopropylated triphenyl phosphate and tetrabromobisphenol-A oligomeric polycarbonate.

28. A method according to Claim 23 in which curing is effected by exposure to high energy radiation.

29. A method according to Claim 28 in which the flame retardant composition includes a crosslinking agent.

30. A method according to Claim 23 in which curing is effected by exposure of the composition to heat in the presence of a crosslinking agent.

**Patentansprüche**

1. Flammhemmende Zusammensetzung, die frei ist von Poly(tetrafluoräthylen) un in Mischung enthält:

a. wenigstens 30 teile eines Homopolymers aus einem $C_2$ bis $C_{10}$-Olefin pro 100 teile (a) und b(i) zusammen und

b. eine flammhemmende Kombination bestehend aus:

(i) einem Polyphenylenätherharz,

(ii) einer organischen Phosphatverbindung der allgemeinen Formel

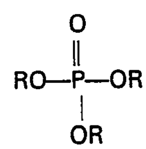

worin R gleiche oder unterschiedliche Reste darstellt und Alkyl, Cycloalkyl, Aryl, alkylsubstituiertes Aryl, halogensubstituiertes Aryl, arylsubstituiertes Alkyl, Halogen oder eine Kombination aus einem beliebigen der vorgenannten Stoffe ist mit der Maßgabe, daß wenigstens ein R Aryl ist und

(iii) einem Material ausgewählt aus:

(1) Verbindungen der allgemeinen Formel

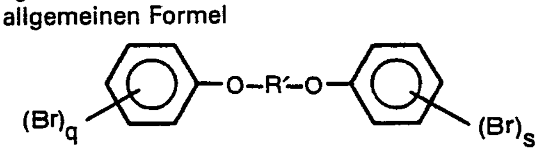

worin R′ geradkettiges oder verzweigtes Alkylen mit 1 bis 10 Kohlenstoffatomen ist und q und s die gesamte Zahl der Bromatome an jedem Ring darstellen und unabhängig voneinander ganze Zahlen von 1 bis 5 sind und (2) einem Tetrabrombisphenol-A oligomeren Polycarbonat und fakulatitiv (iv) einem synergistischen Mittel, welches die flammhemmende Wirkung der Komponente b (iii) vergrößert.

2. Zusammensetzung nach Anspruch 1, in welcher (a) ein Homopolymer eines $C_2$ bis $C_4$ Olefins ist.

3. Zusammensetzung nach Anspruch 1, in welcher (a) ausgewählt ist aus Polyäthylen, Polypropylen und Polybutylen.

4. Zusammensetzung nach Anspruch 1, in welcher (b) (i) ein Homopolymer oder ein Copolymer mit Einheiten der Formel

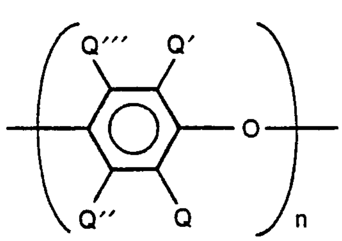

ist, worin Q, Q', Q'' und Q''' unabhängig ausgewählt sind aus der Gruppe bestehend aus Wasserstoff, Halogen, Kohlenwasserstoffresten, Halogenkohlenwasserstoffresten, Hydroxykohlenwasserstoffoxyresten und Halogenkohlenwasserstoffresten und n die gesamte Zahl der Monomereinheiten bezeichnet und eine ganze Zahl von wenigstens etwa 20 ist.

5. Zusammensetzung nach Anspruch 1, in welcher (b) (i) Poly(2,6-dimethyl-1,4-phenylen-äther)harz ist.

6. Zusammensetzung nach Anspruch 1, in welcher die Komponente (b) (ii) Triphenylphosphat ist.

7. Zusammensetzung nach Anspruch 6, in welcher das Triphenylphosphat isopropiliert ist.

8. Zusammensetzung nach Anspruch 1, in welcher (b) (ii) ausgewählt ist aus dem Diphenylphosphat des Resorcinols, dem Diphenylphosphat des Hydrochinons und dem Bis-diphenylphosphat des Bisphenol-A.

9. Zusammensetzung nach Anspruch 1, in welcher (b) (iii) ausgewählt ist aus 1,2-Bis-(2,4,6-tribromphenoxy)ethan und 1,2-Bis(2,3,4,5,6-pentabromphenoxy)ethan.

10. Zusammensetzung nach Anspruch 1, in welcher das synergistische Mittel eine Antimonverbindung ist.

11. Zusammensetzung nach Anspruch 10, in welcher die Antimonverbindung Antimonoxid ist.

12. Zusammensetzung nach Anspruch 1, die ein Polymer mit elastomeren Eigenschaften umfaßt.

13. Zusammensetzung nach Anspruch 12, in welcher das Polymer ein Styrol Co- oder Terpolymer ist.

14. Zusammensetzung nach Anspruch 13, in welcher das Polymer ausgewählt ist aus einem Styrol-Butadien-Styrol-Terpolymer, einen Styrol-Isopren-Styrol-Terpolymer und einem Styrol-Äthylen/Bytylen-Styrol-Terpolymer.

15. Zusammensetzung nach Anspruch 1, in welcher die Komponente (a) vernetzbar ist, wobei diese Zusammensetzung durch Bestrahlung mit hochenergetischer Strahlung härtbar ist.

16. Zusammensetzung nach Anspruch 15, die eine wirksame Menge eines Vernetzungsmittels für (a) umfaßt, wobei diese Zusammensetzung durch Erhitzen aushärtbar ist.

17. Zusammensetzung nach Anspruch 16, in welcher das Vernetzungsmittel ein organisches Peroxid ist.

18. Elektrisch leitfähiger Gegenstand enthaltend einen metallischen Leiter, wobei wenigstens ein Teil der Oberfläche desselben mit einer elektrisch isolierenden Schicht aus einer flammhemmenden Zusammensetzung, wie sie in den vorausgehenden Ansprüchen definiert ist, überzogen ist.

19. Gegenstand nach Anspruch 18, der eine äußere polymer Schutzschicht für die Isolationsschicht aufweist.

20. Gegenstand nach Anspruch 18, in welchem die flammhemmende Zusammensetzung durch Bestrahlung mit hochenergetischer Strahlung ausgehärtet worden ist.

21. Gegenstand nach Anspruch 20, in welchem die Zusammensetzung weiterhin ein Vernetzungsmittel umfaßt.

22. Gegenstand nach Anspruch 18, in welchem die flammhemmende Zusammensetzung ein Vernetzungsmittel umfaßt und durch Bestrahlung durch Wärme ausgehärtet ist.

23. Verfahren zur Herstellung eines elektrisch leitfähigen Gegenstandes enthaltend einen elektrischen Leiter und eine Schicht aus einem flammhemmenden isolierenden Material auf wenigstens einem Teil der Leiteroberfläche, umfassend die Schaffung einer Zusammensetzung nach Anspruch 1, Ausbildung einer Schmelze darselben, Aufbringung derselben auf die Leiteroberfläche und wirksame Aushärtung.

24. Verfahren nach Anspruch 23, in welchem die flammhemmende, isolierended Zusammensetzung Polyäthylen, Polypropylen oder Polybutylen umfaßt.

25. Verfahren nach Anspruch 24, in welchem die flammhemmende isolierende Zusammensetzung Poly-(2,6-dimethyl-1,4-phenylen-äther) umfaßt.

26. Verfahren nach Anspruch 24, in welchem die flammhemmende Komponente der isolierenden Zusammensetzung in Kombination Poly(2,6-dimethyl-1,4-phenylen-äther) isopropyliertes Triphenylphosphat und Bis(2,4,6-tribromphenoxy)äthan umfaßt.

27. Verfahren nach Anspruch 24, in welchem die flammhemmende Komponente der isolierenden Zusammensetzung in Kombination Poly(2,6-dimethyl-1,4-phenylen-äther), isopropyliertes Triphenylphosphat und Tetrabrombisphenol-A-oligomeres Polycarbonat umfaßt.

28. Verfahren nach Anspruch 23, in welchem das Aushärten durch Bestrahlung mit hochenergetischer Strahlung bewirkt wird.

29. Verfahren nach Anspruch 28, in welchem die flammhemmende Zusammensetzung ein Vernetzungsmittel umfaßt.

30. Verfahren nach Anspruch 23, in welchem das Aushärten durch Bestrahlung der Zusammensetzung mit Wärme in Anwesenheit eines Vernetzungsmittels bewirkt wird.

**Revendications**

1. Composition ignifugée dépourvue de poly(tétrafluoro éthylène) comprenant un mélange de:

(a) au moins 30 parties d'un homopolymère d'une oléfine en $C_2$ à $C_{10}$ pour 100 parties de (a) et de (b) (i) combinés; et

(b) une combinaison ignifugeante constituée par

(i) une résine de poly(oxyphénylène),

(ii) un composé de phosphate organique ayant pour formule générale

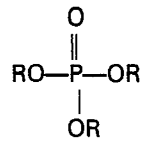

dans laquelle R représente des radicaux identiques ou différents et est un radical alkyle, cycloalkyle, aryle, aryle substitué par un ou des radicaux alkyles, aryle substitué par un ou des halogènes, alkyle substitué par un ou des radicaux aryles, halogène ou une combination de n'importe lesquels des radicaux précédents, à condition qu'au moins un radical R soit un radical aryle,

(iii) un matériau choisi parmi: (1) des composés répondant à la formule générale

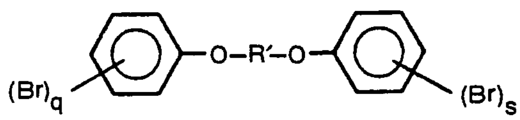

dans laquelle R' représente un radical alkylène, linéaire ou ramifié, ayant de 1 à 10 atomes de carbone et q et s représentent le nombre total d'atomes de brome sur chacun des cycles et sont indépendamment des nombres entiers compris entre 1 et 5 et

(2) un polycarbonate de tétrabromobisphénol-A oligomérique; et facultativement

(iv) un agent de synergie qui augmente l'effet ignifugeant de (b) (iii).

2. Composition selon la revendication 1, dans laquelle (a) est un homopolymère d'une oléfine en $C_2$ à $C_4$.

3. Composition selon la revendication 1, dans laquelle (a) est choisi parmi le polyéthylène, le polypropylène et le polybutène.

4. Composition selon la revendication 1, dans laquelle (b) (i) est un homopolymère ou un copolymère ayant des motifs répondant à la formule

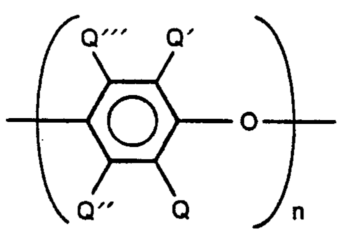

dans laquelle Q, Q', Q'' et Q''', sont indépendamment choisis dans la groupe constitué par l'hydrogène, des halogènes, des radicaux hydrocarbonés, des radicaux hydrocarbonés halogénès, des radicaux oxyhydrocarbonés et des radicaux oxyhydrocarbonés halogénés et n représente le nombre total de motifs de monomère et est un nombre entier d'au moins environ 20.

5. Composition selon la revendication 1, dans laquelle (b) (i) est une résine de poly(oxy diméthyl- 2,6-phénylène-1,4).

6. Composition selon la revendication 1, dans laquelle le composant (b) (ii) est le phosphate de triphényle.

7. Composition selon la revendication 6, dans laquelle le phosphate de triphényle est isopropylé.

8. Composition selon la revendication 1, dans laquelle (b) (ii) est choisi parmi le bis (phosphate de diphényle) de résorcinol, le phosphate de diphényle et d'hydroquinone et le bis (phosphate de diphényle) de bisphenol A.

9. Composition selon la revendication 1, dans laquelle (b) (iii) est choisi parmi le bis (tribromo-2,4,6-phénoxy)-1,2 éthane et la bis(pentabromo-2,3,4,5,6 phénoxy)-1,2 éthane.

10. Composition selon la revendication 1 dans laquelle l'agent de synergie est un composé d'antimoine.

11. Composition selon la revendication 10, dans laquelle le composé d'antimoine est de l'oxyde d'antimoine.

12. Composition selon la revendication 1, qui comprend un polymère ayant des propriétés élastomériques.

13. Composition selon la revendication 12, dans laquelle le polymère est un co- ou un terpolymère de styrène.

14. Composition selon la revendication 13, dans laquelle le polymère est choisi parmi un terpolymère styrène-butadiène-styrène.

un terpolymère styrène-isoprène-styrène, et

un terpolymère styrène-éthylène/butylène-styrène.

15. Composition selon la revendication 1, dans laquelle le composant (a) est réticulable, la composition étant durcissable par exposition à un rayonnement de haute énergie.

16. Composition selon la revendication 15, qui comprend une quantité efficace d'un agent de réticulation pour (a), cette composition étant durcissable par chauffage.

17. Composition selon la revendication 16, dans laquelle l'agent de réticulation est un péroxyde organique.

18. Objet électriquement conducteur comprenant un conducteur métallique, dont au moins une partie de la surface est recouverte d'une couche électriquement isolante d'une composition ignifugée selon l'une quelconque des revendications précédentes.

19. Objet selon la revendication 18, qui comprend un revêtement externe polymérique protecteur pour la couche isolante.

20. Objet selon la revendication 18, dans lequel on a durci la composition ignifugée en l'exposant à un rayonnement de haute énergie.

21. Objet selon la revendication 20, dans lequel la composition comprend également un agent de réticulation.

22. Objet selon la revendication 18, dans lequel la composition ignifugée comprend un agent de réticulation et a subit un durcissement par exposition à la chaleur.

23. Procédé de préparation d'un objet électriquement conducteur comprenant un conducteur électrique et une couche de matériau isolant ignifugé sur au moins une partie de la surface du conducteur, comprenant l'apport d'une composition selon la revendication 1, la formation d'un produit fondu de cette composition, son application sur la surface du conducteur et son durcissement.

24. Procédé selon la revendication 23, dans lequel la composition isolante ignifugée comprend du polyéthylène, du polypropylène ou du polybutène.

25. Procédé selon la revendication 24, dans lequel la composition isolante ignifugée comprend du poly(oxy diméthyl-2,6 phénylène-1,4).

26. Procédé selon la revendication 24, dans lequel l'agent ignifugeant de la composition isolante comprend, en combinaison, du poly(oxy diméthyl-2,6 phénylène-1,4), du phosphate de triphényle isopropylé et du bis(tribromo-2,4,6 phénoxy) éthane.

27. Procédé selon la revendication 24, dans lequel l'agent ignifugeant de la composition isolante comprend, en combinaison, du poly(oxy diméthyl-2,6 phénylène-1,4), du phosphate de triphényle isopropylé et un polycarbonate de tétrabromobisphénol A oligomérique.

28. Procédé selon la revendication 23 dans lequel on effectue le durcissement par exposition à un rayonnement de haute énergie.

29. Procédé selon la revendication 28, dans lequel la composition ignifugée comprend un agent de réticulation.

30. Procédé selon la revendication 23, dans lequel on effectue le durcissement par exposition de la composition à la chaleur en présence d'un agent de réticulation.

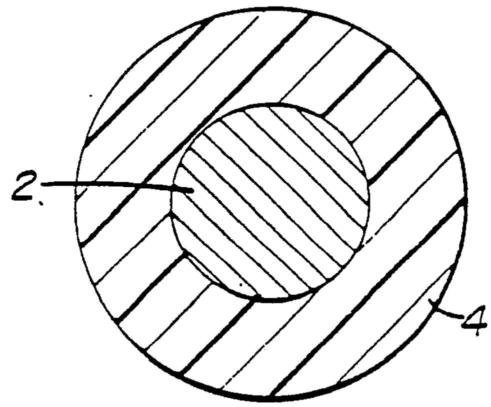


FIG. 1

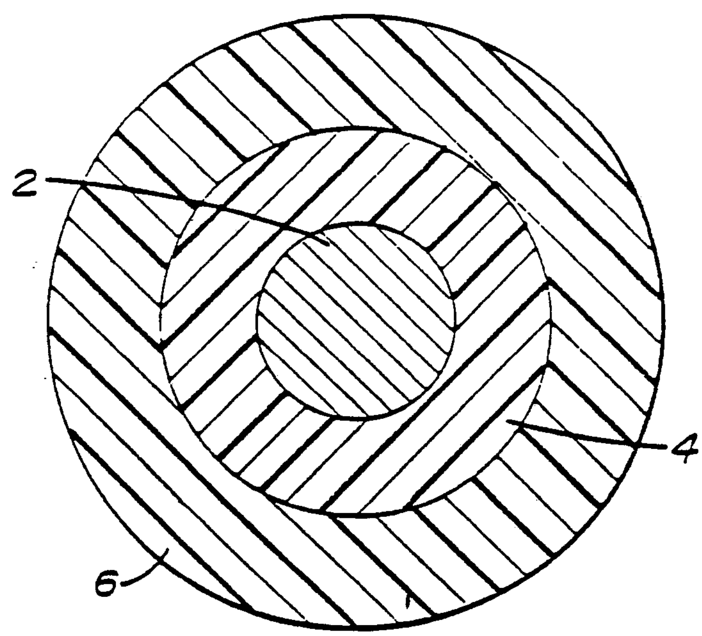


FIG. 2